# EUROPEAN PATENT SPECIFICATION

(11) **EP 4 012 447 B1**
(45) Date of publication and mention of the grant of the patent: **02.12.2026**
(21) Application number: 21218371.9
(22) Date of filing: 26.10.2017
(51) Int. Cl.: G01S 13/58, A63B 57/19

(54) **SKID AND ROLL TRACKING SYSTEM**
RUTSCH- UND ROLLVERFOLGUNGSSYSTEM
SYSTÈME DE SUIVI DE GLISSEMENT ET DE ROULEMENT

(30) Priority: 31.10.2016 US 201615339356
(43) Date of publication of application: 15.06.2022
(62) Document number(s) of the earlier application(s) in accordance with Art. 76 EPC: 17817097.3 / 3 532 862
(73) Proprietor: Trackman A/S, 2970 Hørsholm (DK)
(72) Inventor: TUXEN, Fredrik, 2970 Horsholm (DK); BRASCH, Jesper, 2800 Kgs Lyngby (DK)
(74) Representative: Betten & Resch

(56) References cited:
- WO-A1-2006/002640
- WO-A2-2005/035076
- WO-A2-2008/038005
- US-A1- 2002 107 078

## Description

### Background

Systems are known for tracking the flight of a object such as a golf ball. However, such systems are often unable to distinguish between and measure bouncing, sliding and rolling of the object. Previous systems have purported to measure skid, which includes both bouncing and sliding of objects but only on special surfaces like a velvet carpet- not in real world situations such as, for example, the motion of a golf ball across a putting green. Other systems have required special markings on objects to compare a spin rate of a ball to its linear speed to identify a time at which the ball begins to truly roll. However, these systems work only with specialized balls and are unsuitable for situations in which players use balls not including such specialized markings.
WO 2005/035076 A2 discloses a system and an apparatus for providing data relating to a sports club/bat and/ or a sports ball before, during and after launch. Radars or other data providers may be provided at or near the expected position of landing of a golf ball in order to give ball flight data of the end trajectory and bouncing/ rolling of the golf ball. Movement of the ball is measured using one or more radars. Velocity, smash factor, angle, spin, drag may be determined. Data relating to the ball impact position, bouncing and roll may be provided and illustrated on a monitor.

### Summary

The present invention relates to a system for tracking an object, the object being a sport ball. The system includes a first tracking device aimed so that a first field of view of the first tracking device covers at least a portion of a target volume into which an object is to be launched. The system also includes a processor receiving data from the tracking device and identifying from the data a velocity of the object over time as it moves over a surface. The processor identifies, based on changes in the velocity and of the derivative thereof of the object, first portions of the path of the object during which the object is bouncing, second portions of the path during which the object is sliding and one or more third portions during which the object is rolling.

The invention is defined by the independent claims. Dependent claims specify embodiments thereof.

### Examples and embodiments

The tracking system can be any tracking system capable of measuring as a minimum the velocity of the ball as a function of time. Preferably, the position of the ball is also measured. The tracking system device performs the tracking contactless and preferably without any modifications to the ball. The tracking system may be a Doppler radar, lidar or camera tracking device, or any combination thereof.

According to an exemplary embodiment, for each of a plurality of time frames, the processor receives from the first tracking device a signal and calculates from this signal object data including position and velocity values for the object identified.

According to an exemplary embodiment, the processor determines a velocity value for the object at each of a plurality of time frames to determine velocity of the object as a function of time.

According to an exemplary embodiment, the processor separates a path of the object into a plurality of segments based on changes in velocity. For example, each segment may represent a portion of the total path during which a derivative of the velocity (deceleration) is substantially constant. That is, the segments will be separated at points where discontinuities in the deceleration are detected.

According to an example not covered by the claims, each of the plurality of segments is identified as one of a bounce, slide or roll state based on a deceleration during the segment and/or the distance traveled during the segment. The distance R traveled during the segment can preferably be calculated as the area under the velocity versus time curve V(t) during the time interval or the segment ${R}_{t 1 \to t 2} = {\int }^{t 2} V \left(t\right) dt$

According to an example not covered by the claims, when the deceleration during a segment is greater than 2 m/s² (acceleration less than -2 m/s²) and the previous segment was not a roll state, the object is determined to be in a slide state.

According to an example not covered by the claims, if the deceleration during a segment is greater than 0.5 m/s² butt lower than 2 m/s² the object is in a roll state

According to an example not covered by the claims, if the deceleration during the segment is less than 0.5 m/s² and the distance traveled of the object during the segment divided by the total distance traveled of the entire path of the object is greater than 0.3, the object is in a bounce state.

According to an example not covered by the claims, the distance traveled by the object in a bounce, slide or rolling state is determined by calculating the area under the respective bounce, slide or rolling segment velocity versus time curve.

According to an exemplary embodiment, the system detects discontinuities in the velocity and in derivatives thereof (acceleration) to identify the beginning and end of each segment.

According to an example not covered by the claims, discontinuities are detected where a difference between first and second adjacent data points is greater than a set threshold.

According to an example not covered by the claims, the tracking device is a continuous wave Doppler radar. In this case the radial velocity of the object V_{rad} relative to the radar can be directly measured from the Doppler frequency shift F_{d} in the radar signal using the Doppler equation V_{rad} = F_{d}*λ/2, where λ is the wavelength of the transmitting frequency of the radar.

According to an example not covered by the claims, the system includes a screen displaying the data.

According to an example not covered by the claims, the first radar transmit frequency is between 10 and 125 GHz.

According to an example not covered by the claims, the system further includes a second tracking device aimed so that a second field of view of the second tracking device covers at least a portion of the target volume including a portion of the target volume outside the first field of view.

### Figures

Fig. 1 shows a perspective view of a putting green with a radar tracking system according to a first exemplary embodiment of the invention;
Fig. 2 shows a flow chart of a method of operation of a radar specific computer according to an exemplary embodiment;
Fig. 3 shows a flow chart of a method for tracking and segmenting the velocity of the object according to an exemplary embodiment;
Fig. 4A shows a graph displaying a first sample Doppler frequency spectrogram from a Doppler radar;
Fig. 4B shows a graph of the velocity of an object detected in the Doppler frequency spectrogram of Fig. 4A as a function of time;
Fig. 4C shows a graph of the acceleration of the object determined from the velocity graph in Fig. 4B;
Fig. 5A shows a graph displaying a second sample Doppler frequency spectrogram from a Doppler radar;
Fig. 5B shows a graph of the velocity of an object detected in the Doppler frequency spectrogram of Fig. 5A as a function of time;
Fig. 5C shows a graph of the acceleration of the object determined from the velocity graph in Fig. 5B;
Fig. 6 shows a flow chart of the method for determining if a segment relates to a slide, roll or bounce state;
Fig. 7 shows an exemplary display screen of the device associated with the user at the putting green; and
Fig. 8 shows a graph of the height of the object as a function of the distance traveled.

### Detailed Description

The exemplary embodiments may be further understood with reference to the following description and the related appended drawings, wherein like elements are provided with the same reference numerals. The exemplary embodiments relate to a system and method using a tracking device such as, for example a radar device, to track the trajectory of an object launched from a launching location as the object moves through an area to classify the movement of the object as in a bounce, slide or roll state, and time/distance traveled for each segment. Depending on the physical size of the launch areas as well as practical issues like line-of-sight blockage for a first tracking device, it may be desirable to have one or more additional radar devices in the system to increase the coverage and accuracy of the volume being monitored by the system. Although exemplary embodiments detailed herein describe the tracking of golf balls, those skilled in the art will understand that any sports balls or even non-sports related objects may be tracked with the system in the same manner.

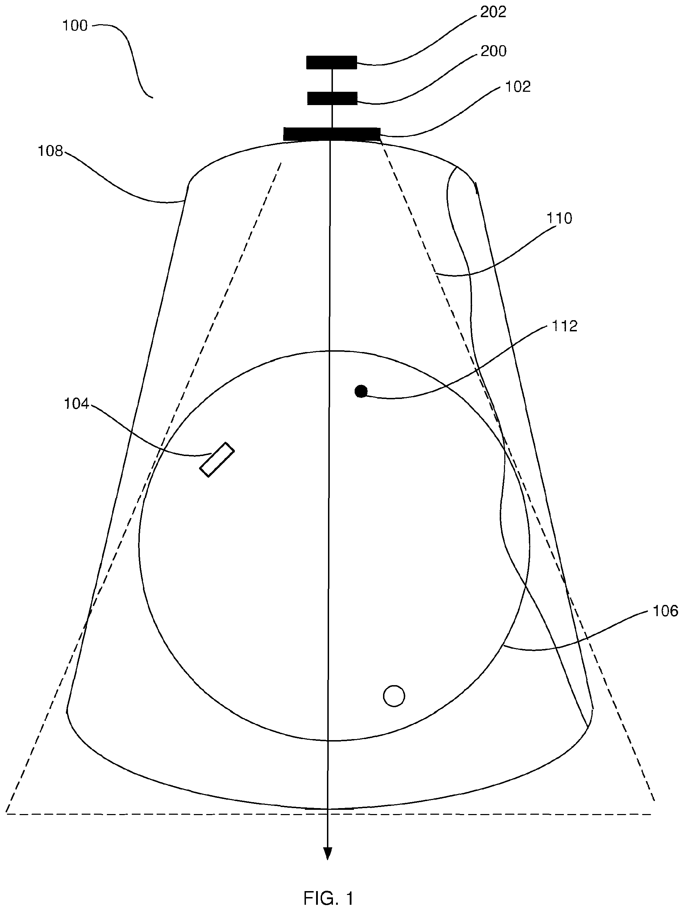

Fig. 1 shows a first system 100 for tracking an object according to the exemplary embodiments. The first system 100 includes tracking device 102 (i.e. a radar device) distributed around the target area into which the object is to be launched. In the embodiment of Fig. 1, the system 100 is a system for tracking a golf ball 112 hit within a target area (e.g., practice green 106) from a put launch location 104 located at a first area 108 of the putting green 106. As would be understood, the put launch location 104 may be located at any area within the putting green 106. As will be described below, the target area, does not need to be any specially created area and can be a golf green or practice green with an irregular, undulating grass surface and one or more holes or other targets. The radar 102 may, for example, be a continuous wave Doppler radar emitting microwaves at an X-band frequency (8-125 GHz) at a power of up to 500 milliWatts EIRP (Equivalent Isotropic Radiated Power), thus being compliant with FCC and CE regulations for short range international radiators. However, in other jurisdictions, other power levels may be used in compliance with local regulations. In an exemplary embodiment, microwaves are emitted at a higher frequency between, for example, 10-125 GHz. For more precise measurements at lower object speeds frequencies of 20 GHz or higher may be used. Any type of continuous wave (CW) Doppler radar may be used, including phase or frequency modulated CW radar, multi frequency CW radar or a single frequency CW radar. It will be understood that other tracking devices such as lidar may be used with radiation in either the visible or non-visible frequency region. Current pulsed radar systems are limited in their ability to track objects close to the radar device. However, the distance an object must be from these pulsed radar systems has decreased over time and is expected to continue to decrease. Thus, these types of radar may soon be effective for these operations and their use in the systems of the invention described below is contemplated. Throughout the application, the tracking of objects is described based on the use of Doppler frequency spectrums. As would be understood, these Doppler frequency spectrums refer to the data from continuous wave Doppler radar. If a pulse radar system were employed similar data would be calculated based on a time required for the pulse to return to the radar after reflecting off an object. Any other type of radar capable of three-dimensionally tracking objects similar to those described herein may also be used. In another embodiment, a one-dimensional tracking device may be used such as a one-dimensional Doppler radar. In another embodiment, the system may use multiple tracking devices distributed about a target area into which the object is to be launched. In this embodiment, each of the tracking devices may be situated at any location around the green and, where multiple tracking devices are employed, they may be deployed around the green with overlapping fields of view.

As seen in Fig. 1 the radar device 102 is positioned close to and facing a target area 108 including a practice green 106. The radar device 102 in this embodiment is positioned so that a field of view 110 of the radar device 102 encompasses the entire practice green 106 and some of the surrounding area. This location close to the practice green 106 is selected to permit the radar device 102 to track objects launched from nearly any location within the practice green 106 (unless screened by intervening objects or people on the green) without blockage from trees, buildings or other structures. For a typical practice green 106, this means that the radar device 102 is positioned either a) centered on the practice green 106 or b) elevated above the players. In some embodiments, an optimal position of a radar device may be either directly behind the intended starting location of the put, such as 5-10 feet behind, or directly in front of the intended direction of the put facing backwards toward the starting location of the put, such as 10-40 feet in front, depending on the length of the put.

The system 100 includes a data processing system 200 which, as would be understood by those skilled in the art, may include one or more computers coupled to the radar device 102 (or multiple radar devices) via either a wired or wireless connection. In an embodiment the data processing system 200 includes a computer 202 associated with the radar device 102. In an exemplary embodiment, the computer 202 defines a three-dimensional radar coordinate system related to data from the radar device 102 permitting the computer 202 to track objects such as the object 112 moving through the field of view 110 and to plot the trajectory of the object 112 relative to the green 106. Those skilled in the art will understand that the universal coordinate system may be made identical to the radar coordinate system to simplify calculation or identical to a radar coordinate system of one of the radar devices of a multi-radar system. However, it may be desirable to define the universal coordinate system based on permanent physical features present in the field of view 110 so that the system 100 may be recalibrated with reference to these permanent physical features as necessary. For example, the coordinate system may be based on a horizontal axis extending from a center of the green 106 to a center of an end line of the green 106. Thus, if the radar device 102 is moved, it may be readily recalibrated to accurately correlate position and trajectory of objects to the features of the green 106.

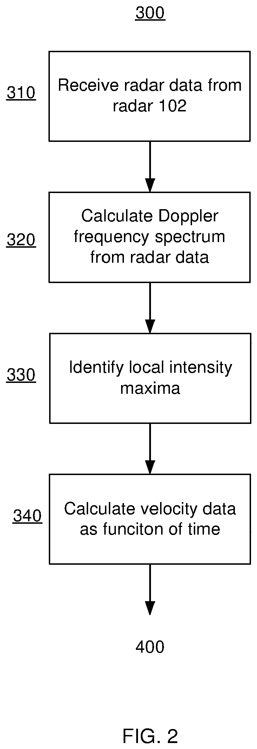

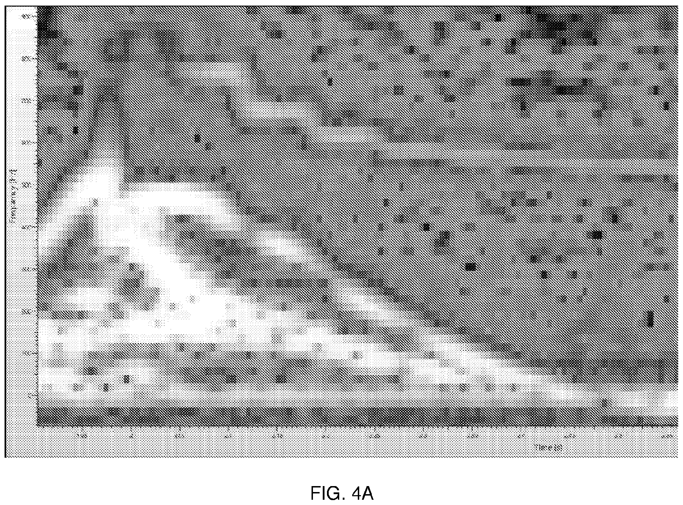

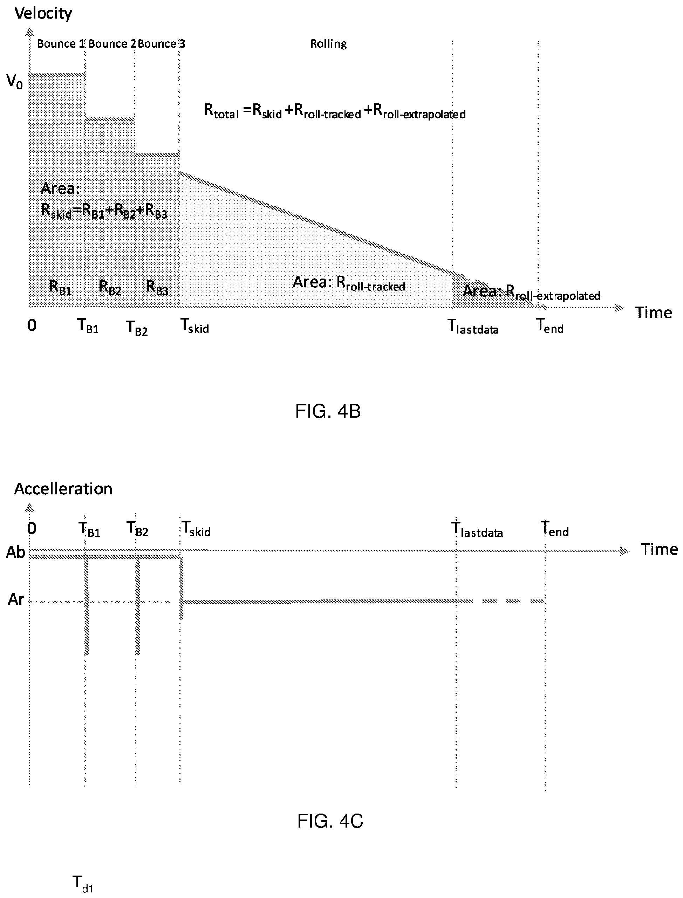

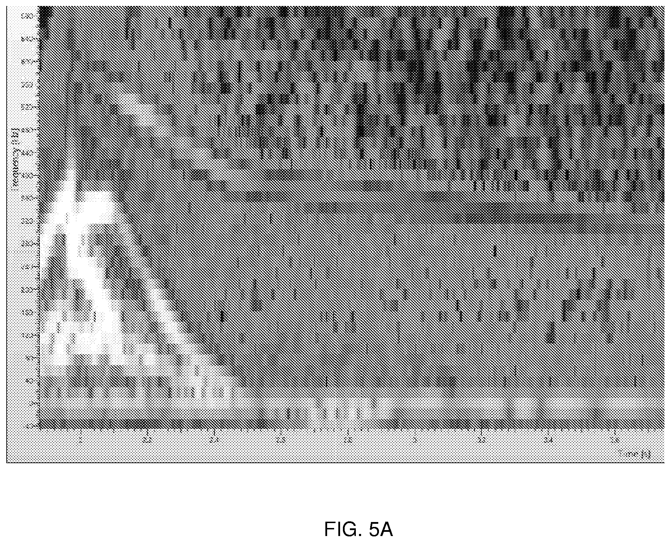

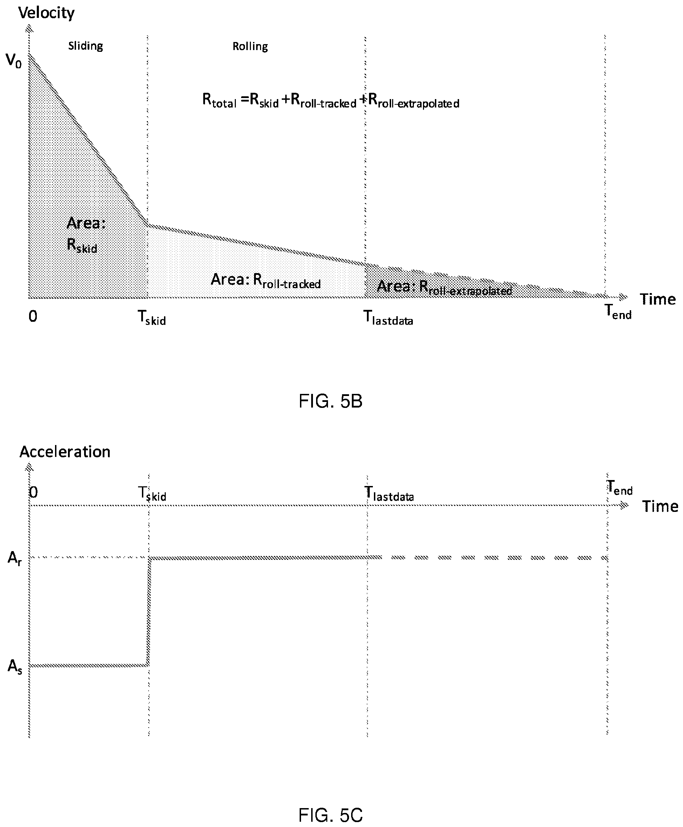

The flow chart of Fig. 2 shows a method 300 of operation implemented by the computer 202, which method is repeated at each time interval for which the measurements are taken. For example, in an exemplary system, the computer 200 may perform the method of Fig. 2 every 10 ms (or 100 times per second). For each time interval, in step 310, the computer 202 receives data from the radar device 102 and transmits to the computer raw Doppler radar data. In step 320, the computer 202 calculates a Doppler frequency spectrum 204, for example, by using the fast Fourier transform (FFT), as shown in Figs. 4A, 5A for multiple time intervals forming a spectrogram. In step 330, the computer 202 uses known techniques to identify local intensity maxima from the Doppler frequency spectrum 204. As would be understood by those skilled in the art, velocity data for the object 112 represented in the radar data is then calculable at each identified point in time. In step 340, the computer 202 then calculates a resulting graph of the velocity of the object 112 as a function of time, as shown in Figs. 4B, 5B. As would be understood by those skilled in the art, the slope of the velocity graph corresponds to an acceleration or deceleration of the object 112, as shown in Figs. 4C, 5C, and the area under the slope corresponds to a distance the object 112 has traveled. It will be understood by those skilled in the art that the higher the Doppler radar transmit frequency, the higher the velocity resolution for the same observation time. A high velocity resolution may be desired to track putts which appear at low velocities - generally less than 10 ^{m}/s - and to separate the ball from other objects in the field, i.e. putter head, putter shaft and golfer. An exemplary velocity resolution of less than 0.25 ^{m}/s is preferable. The high velocity resolution is useful also with short observation times (e.g., 0.100 seconds or less) to enable accurate tracking of velocity jumps to identify transitions between bouncing, sliding and/or rolling states of the ball, the observation time being the time span for each. For example, good tracking has been accomplished with X band frequencies as low as (8-12 GHz). In an exemplary embodiment, a higher frequency of more than 20 GHz may be used to enhance the accuracy of the identification of transitions between bouncing, sliding and rolling states and to track balls at lower velocities. It will be understood by those skilled in the art that using a transmit frequency lower than 8 GHz is also possible although this may make it more challenging to accurately track velocity as a function of time in practical situations.

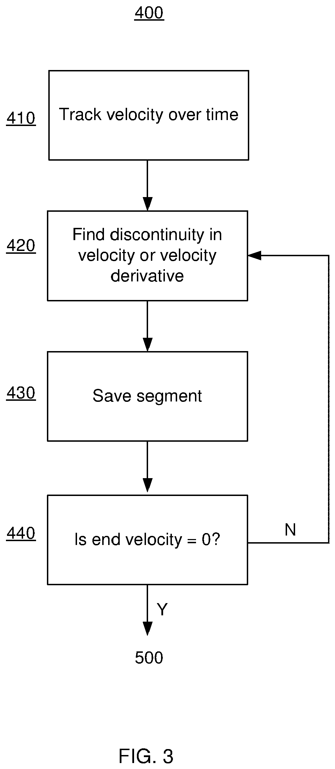

In this embodiment, the computer 202 performs the method 400 of Fig. 3 at each time interval to identify movement as relevant to the system (i.e., distinguish between the object 112 and birds, leaves and other items moving through the field of view 110) and to segment the velocity of the object 112 into specific velocity intervals. That is, a segment is defined as a time interval during which the velocity is continuous and has a continuous derivative. As would be understood by those skilled in the art, moving items which do not follow the pattern associated with movement of a putted ball (i.e., golf club, golfer, leaves, birds) are detected and eliminated from analysis. In step 410 the computer 202 tracks the velocity of the object 112 over time, as well as the derivative of the velocity, i.e. the deceleration (negative acceleration) of the object. For example, the computer 202 tracks the velocity starting at time 0, which is the first detected moment of contact between the putter and the ball. In step 420, discontinuity detection is implemented to detect any discontinuity in the velocity and/or the derivative thereof (acceleration). In an exemplary embodiment, the discontinuity may be detected by the processor for any time at which a change in velocity or derivative jump from one data point to an adjacent data point is greater than a set threshold. For example, an exemplary threshold value for velocity discontinuity may be a change of 0.05 ^{m}/s while and exemplary threshold value for acceleration discontinuity may be a change of 0.2 ^{m}/s². If a discontinuity is detected, the computer 202 designates the continuous portion between this discontinuity and an immediately previous discontinuity (or time 0) as a first segment and the segment is saved. For example, in Fig. 4B, the first segment extends from 0 to T_{B1}, where a change in the slope of the velocity is determined to be a discontinuity. In step 440, the computer determines whether the end velocity of the first segment is greater than 0 at T_{B1}. If so, the computer returns to step 420 and continues to track the velocity, starting at T_{B1}. The method is repeated until the velocity reaches 0 at time T_{lastdata}, (or a velocity below which tracking device 102 is unable to track the object 112) with the computer 202 saving each segment of the velocity between adjacent discontinuities.

When the velocity of the object 112 drops below the minimum level detectably by the particular tracking device(s) being used, the velocity of the object 112 may be extrapolated by extending the slope of the velocity during the last segment detected by the radar device 102, as shown in Figs. 4B, 5B to a zero velocity. For example, in Fig. 4B the slope of the velocity from T_{skid} to T_{lastdata}, T_{lastdata} being the point at which the tracking device 102 last detected the velocity of the object 112, is simply extended from T_{lastdata} to T_{end}, where T_{end} is the time at which the object stopped moving. Those skilled in the art will understand that once an object 112 begins to roll, the deceleration, or change in velocity over time, will be relatively constant (except as influenced by the sloping of the surface of the green).

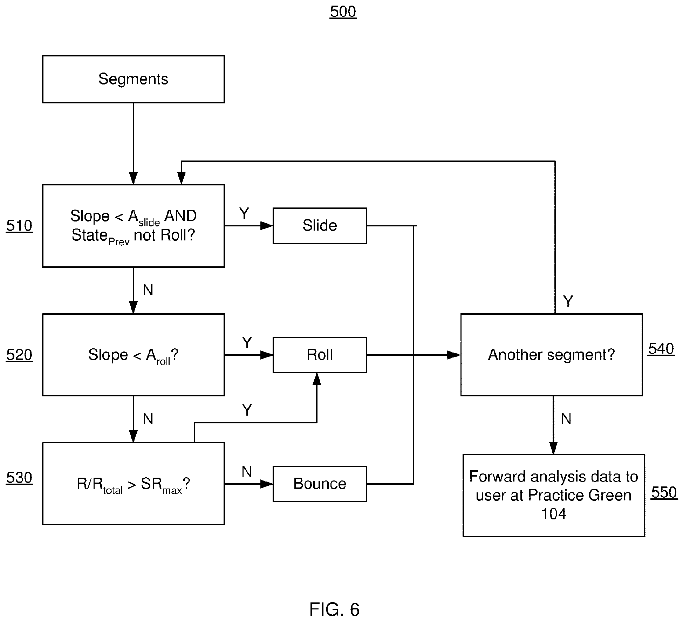

As shown in Fig. 6, for each segmented portion, the computer 202 analyzes the slope of the velocity to determine the state of the object 112 (i.e. slide, bounce or roll, during the segments time interval). For a rolling ball on a flat green, the minimum slope of a graph of velocity/time is approximately -0.35 ^{m}/s² while the maximum slope is approximately -1.4 ^{m}/s². The slope associated with a sliding ball on a flat green is typically a factor 4 more negative than the rolling ball, such as, for example, from -1.4 ^{m}/s² to -5.6 ^{m}/s², while the slope of a bouncing ball lies between 0.1 and -0.5 ^{m}/s². Those skilled in the art will understand that these figures are exemplary only and may vary depending on various factors such as, for example, the surface the object is moving on (e.g., length and characteristics of the grass, the size of the object, and whether the surface inclines or declines, wind peed and direction, etc.) as well as spin of the ball during bouncing and sliding. Since, generally, the ball ultimately ends in a rolling state before stopping, it is recommended to analyze the decelerations at the last segment and use this to establish the rolling acceleration threshold as well as the sliding acceleration threshold.

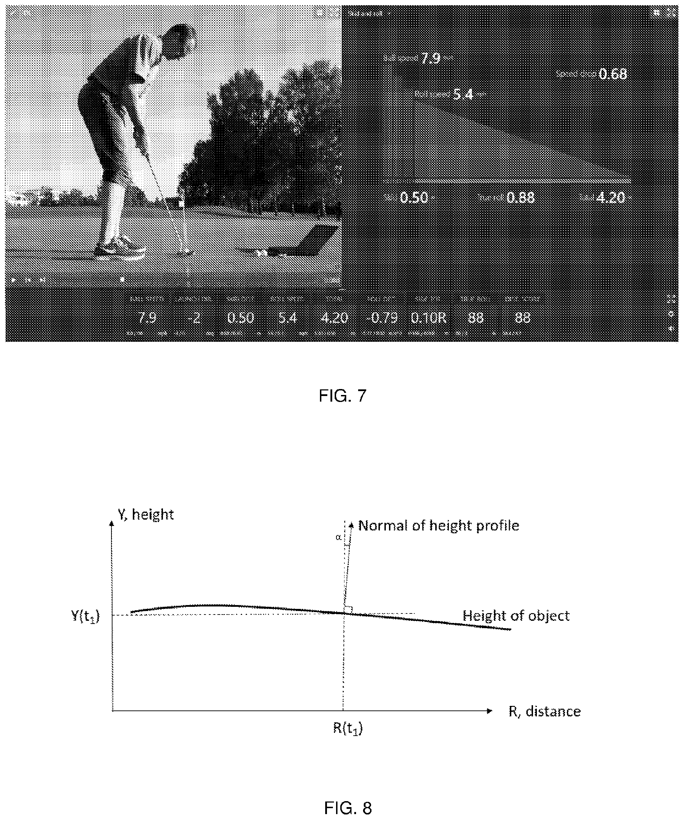

If the green is not flat, a component of gravity acceleration may be added to the ball equaling sin(α) * G during sliding and rolling states of the ball, where α is the inclination of the ground relative to the waterline in the direction of the putt and G is the gravity acceleration on earth (9.81 ^{m}/s²). For an even better thresholding between sliding and rolling state determination of the ball, the acceleration used for determining sliding or rolling states of the ball for nonbounce segments could be compensated as A_{slope_corrected} = A_{measured} - sin(α) * G, where α is positive if the green 106 slopes downhill and negative if the green 106 slopes uphill in the direction of travel of the object 112. If the tracking system is capable of measuring the height of the object as a function of distance traveled, this can be used to calculate the slope α at any given time, as can be seen in Fig. 8. Alternatively, the slope may be predetermined.

Those skilled in the art will understand that a putted ball 112 will always start in either a slide or a bounce state - i.e., a ball putted from rest will not immediately be rolling on the green without sliding or bouncing. After a time, the ball 112 may begin to roll without sliding after which it will no longer slide and will only bounce if the ball 112 hits an object on the surface such as, for example, a stick, stone or piece of dirt. In step 510 a segment is analyzed to determine whether the slope of the segment is less than a threshold Aslide. Aslide is typically around -2 ^{m}/s². If the slope is found to be less than Aslide and a previous segment was not a rolling state, the segment is determined to be a sliding state and the method moves to step 540. However, if the previous segment was a rolling state or slope is greater than Aslide, the computer 202 moves to step 520. In step 520, the segment is further analyzed to determine if the slope of the segment is less than a threshold Aroll, where Aroll is typically -0.5 ^{m}/s². If the slope is found to be less than -0.5 ^{m}/s², the segment is determined to be a rolling state and the method moves to step 540. If the slope is found to be greater than -0.5 ^{m}/s², the computer 202 moves to step 530. In step 530, the computer 202 determines if the distance traveled R during this segment, corresponding to the area under the velocity vs. time segment, divided by the total distance traveled by the ball, Rₜₒₜₐₗ (R_{bounce} + R_{slide} + R_{roll-tracked} + R_{roll-extrapolated}), is greater than a threshold SRₘₐₓ, where SRₘₐₓ is typically 0.3. If yes, the segment is determined to be a rolling state. If not, the segment is determined to be a bounce state and the method moves to step 540. In step 540 the computer 202 determines whether there is another saved segment that has not yet been analyzed. If yes, the computer 202 analyses this next saved segment (e.g., the segment next in time after the previously analyzed segment) and proceeds through steps 510-540 again until every segment has been analyzed and the state associated with each segment has been established. In step 550, once all segments have been analyzed, the data may be provided to an output device 212 (e.g., a device adjacent to the putting green 106 or at any other location where a user may review the data) as shown n Fig. 7. For example, this device 212 may be a screen displaying the data, a mobile device associated with a user located at the green 106, etc. As mentioned before, the thresholds A_{slide} and Aᵣₒₗₗ can be predetermined or adjusted according to the measured acceleration of the last segment Aₗₐₛₜ. Since the ball will in almost every case be rolling in the last segment, Aₗₐₛₜ will equal the acceleration of the rolling state Aᵣₒₗₗ. Consequently, a suitable threshold for Aᵣₒₗₗ will be around 0.5*Aₗₐₛₜ. Similarly, a suitable threshold for A_{slide} will be around 2*Aₗₐₛₜ.

In some instances, the user may wish to know the distance the object 112 traveled before it began a roll state- i.e. the distance the ball 112 bounced and/or slid before beginning to roll. Even though the procedures 400 and 500 in Figs. 5 and 6 are aimed at finding every discontinuity in velocity and/or deceleration, this is not required. For example, a user may want to determine only a time and distance traveled up to the point in time at which the ball first enters the rolling state, without quantifying how many bounces and/or slide segments occurred before that. The computer 202 determines the distance by calculating a total area under each velocity versus time segment determined to be in a bounce or slide state. This distance data may then be forwarded to the device 212 and this distance may then be compared to a total length of the putt. As would be understood by those skilled in the art, this data forwarded to device 212 may include graphic data illustrating velocity of the object 112 along its trajectory, tabular data concerning variables such as launch speed, initial roll speed, distance covered of different segments, decelerations of segments, number of bounces, etc. A particularly interesting deceleration is the rolling state deceleration A_{rcorrected} compensated for the slope of the ground over which the object rolls. This value is directly related to the "stimpmeter" reading of the green, which is a key figure for characterization of golf green speed conditions. A stimpmeter is a mechanical device used to launch a golf ball on the green with a well defined initial velocity V0 (approximately 1.94 m/s) in a state where the ball is fully rolling. The stimpmeter reading is the distance traveled by the ball on the green in feet. The stimpmeter reading can be determined from StimpMeter_ft = 0.5*V0²/Ar_{corrected}/0.3048. Consequently, the present invention provides a very attractive way of determining the "stimpmeter" reading for a green.

Those skilled in the art will understand that although the previously described embodiments describe a golf ball being hit on a practice green, the above-described exemplary embodiments may be implemented to track the velocity and movement of any spherical object on any surface. For example, the system 100 may track putts on any green of a golf course, a chip golf shot hit onto a green, a full golf shot hit onto any portion of a golf course (e.g., rough, fairway, bunker, apron, green, etc.). In another exemplary embodiment, the described system 100 may also be used to track any other sports ball to compare the path of the ball to boundaries (e.g., to determine whether a hit baseball is fair or foul, whether a tennis shot is in or out, etc. Other applications include bowling and billiards (e.g., to determine when a bowling or billiards ball starts to roll after an initial period of sliding and/or bouncing) and soccer (e.g., to measure the bounce, slide and roll of a kick).

Those skilled in the art will understand that the above-described exemplary embodiments may be implemented in any suitable software or hardware configuration or combination thereof. An exemplary hardware platform for implementing the exemplary embodiments may include, for example, an Intel x86 based platform with compatible operating system, a Windows platform, a Linux platform, a Mac platform and Mac OS, a mobile device having an operating system such as iOS, Android, etc. In a further example, the exemplary embodiments of the above described method may be embodied as a program containing lines of code stored on a non-transitory computer readable storage medium that may be executed on a processor or microprocessor.

## Claims

1. A system (100), comprising:
a tracking device (102) aimed so that a first field of view of the tracking device (102) covers at least a portion of a target volume into which an object (112) is to be launched from a launch location (104), the object (112) being a sports ball; and
a processor receiving, from the tracking device (102), data of the object (112) over a time span as the object travels over a surface through the first field of view and identifying from the data a velocity of the object (112) over time, the processor determining, based on changes in the velocity of the object (112) and on changes of the derivative of the velocity of the object (112) over time, which of a bouncing state, a sliding state and a rolling state the object (112) is in at a given time during the time span.

2. The system (100) of claim 1, wherein the processor calculates a velocity curve of the object (112) over time, separates the velocity curve into segments and determines for each segment whether the object (112) is in the bouncing state, the sliding state, or the rolling state based on the changes in the velocity of the object (112) and based on the changes of the derivative of the velocity of the object (112) over time for each segment.

3. The system (100) of claim 2, wherein the segments are bounded by transition points and a transition point is identified as a point at which a change in the velocity of the object (112) and in the derivative of the velocity of the object (112) is greater than a set threshold.

4. The system (100) of claim 3, wherein each of the segments is determined to be in the bouncing state, the sliding state, or the rolling state based in part on a determined slope of the segment.

5. The system (100) of any of claims 1 to 4, wherein the tracking device captures data from a signal reflected off the object (112).

6. The system (100) of any of claims 1 to 5, wherein the object (112) is an unmodified golf ball.

7. The system (100) of any of claims 1 to 6, wherein the processor determines a deceleration of the object (112) when the object (112) is in the rolling state and adjusts the determined deceleration based on a slope of the surface over which the object rolls.

8. The system (100) of claim 7, wherein the processor subtracts, based on the slope of the surface over which the object rolls, any acceleration or deceleration to the object (112) caused by gravity to determine the adjusted deceleration of the object (112) caused by the surface over which the object rolls.

9. The system (100) of claim 8, wherein the processor outputs the adjusted deceleration of the object (112) in the rolling state as a stimp reading.

10. A method, comprising:
positioning a tracking device (102) aimed so that a field of view of the tracking device (102) covers at least a portion of a target volume into which an object (112) is to be launched from a launch location (104), the object (112) being a sports ball;
identifying, from data of the object (112) over a time span as the object travels over a surface through the first field of view, a velocity of the object (112) over time;
determining, based on changes in the velocity of the object (112) and on changes of the derivative of the velocity of the object (112) over time, which of a bouncing state, a sliding state and a rolling state the object (112) is in at a given time during the time span.

11. The method of claim 10, further comprising:
calculating a velocity curve of the object (112) over time;
separating the velocity curve into segments; and
determining for each segment whether the object (112) is in the bouncing state, the sliding state, or the rolling state based on the changes in the velocity of the object (112) and based on the changes of the derivative of the velocity of the object (112) over time for each segment.

12. The method of claim 11, wherein the segments are bounded by transition points and a transition point is identified as a point at which a change in the velocity of the object (112) and in the derivative of the velocity of the object (112) is greater than a set threshold.

## Patentansprüche

1. System (100), umfassend:
eine Trackingvorrichtung (102), die derart ausgerichtet ist, dass ein erstes Sichtfeld der Trackingvorrichtung (102) wenigstens einen Teil eines Zielvolumens abdeckt, in das ein Objekt (112) von einem Startort (104) aus zu starten ist, wobei das Objekt (112) ein Sportball ist; und
einen Prozessor, der von der Trackingvorrichtung (102) Daten des Objekts (112) während einer Zeitdauer empfängt, während sich das Objekt über eine Oberfläche durch das erste Sichtfeld fortbewegt, und aus den Daten eine Geschwindigkeit des Objekts (112) über die Zeit identifiziert, wobei der Prozessor basierend auf Änderungen der Geschwindigkeit des Objekts (112) und auf Änderungen der Ableitung der Geschwindigkeit des Objekts (112) über die Zeit bestimmt, in welchem von einem Aufprallzustand, einem Rutschzustand und einem Rollzustand das Objekt (112) sich zu einem gegebenen Zeitpunkt während der Zeitdauer befindet.

2. System (100) nach Anspruch 1, wobei der Prozessor eine Geschwindigkeitskurve des Objekts (112) über die Zeit berechnet, die Geschwindigkeitskurve in Segmente separiert und für jedes Segment bestimmt, ob das Objekt (112) in dem Aufprallzustand, dem Rutschzustand oder dem Rollzustand ist, basierend auf den Änderungen der Geschwindigkeit des Objekts (112) und basierend auf den Änderungen der Ableitung der Geschwindigkeit des Objekts (112) über die Zeit für jedes Segment.

3. System (100) nach Anspruch 2, wobei die Segmente durch Übergangspunkte begrenzt sind, und ein Übergangspunkt als ein Punkt identifiziert wird, an dem eine Änderung der Geschwindigkeit des Objekts (112) und der Ableitung der Geschwindigkeit des Objekts (112) größer als eine eingestellte Schwelle ist.

4. System (100) nach Anspruch 3, wobei jedes der Segmente als in dem Aufprallzustand, dem Rutschzustand oder dem Rollzustand befindlich bestimmt wird, basierend teilweise auf einer bestimmten Neigung des Segments.

5. System (100) nach einem der Ansprüche 1 bis 4, wobei die Trackingvorrichtung Daten von einem Signal erfasst, das von dem Objekt (112) reflektiert wird.

6. System (100) nach einem der Ansprüche 1 bis 5, wobei das Objekt (112) ein unmodifizierter Golfball ist.

7. System (100) nach einem der Ansprüche 1 bis 6, wobei der Prozessor eine Verzögerung des Objekts (112) bestimmt, wenn das Objekt (112) in dem Rollzustand ist, und die bestimmte Verzögerung basierend auf einer Neigung der Oberfläche anpasst, über die das Objekt rollt.

8. System (100) nach Anspruch 7, wobei der Prozessor basierend auf der Neigung der Oberfläche, über die das Objekt rollt, eine Beschleunigung oder Verzögerung des Objekts (112), die durch Schwerkraft verursacht wird, subtrahiert, um die angepasste Verzögerung des Objekts (112) zu bestimmen, die durch die Oberfläche bewirkt wird, über die das Objekt rollt.

9. System (100) nach Anspruch 8, wobei der Prozessor die angepasste Verzögerung des Objekts (112) in dem Rollzustand als einen Stimpmesswert ausgibt.

10. Verfahren, umfassend:
Positionieren einer Trackingvorrichtung (102), die derart ausgerichtet ist, dass ein Sichtfeld der Trackingvorrichtung (102) wenigstens einen Teil eines Zielvolumens abdeckt, in das ein Objekt (112) von einem Startort (104) aus zu starten ist, wobei das Objekt (112) ein Sportball ist;
Identifizieren einer Geschwindigkeit des Objekts (112) über die Zeit aus Daten des Objekts (112) über eine Zeitdauer, während das Objekt sich über eine Oberfläche durch das erste Sichtfeld fortbewegt;
Bestimmen, basierend auf Änderungen der Geschwindigkeit des Objekts (112) und auf Änderungen der Ableitung der Geschwindigkeit des Objekts (112) über die Zeit, in welchem von einem Aufprallzustand, einem Rutschzustand und einem Rollzustand sich das Objekt (112) zu einem gegebenen Zeitpunkt während der Zeitdauer befindet.

11. Verfahren nach Anspruch 10, ferner umfassend:
Berechnen einer Geschwindigkeitskurve des Objekts (112) über die Zeit;
Separieren des Geschwindigkeitskurve in Segmente; und
Bestimmen, für jedes Segment, ob sich das Objekt (112) in dem Aufprallzustand, dem Rutschzustand oder dem Rollzustand befindet, basierend auf den Änderungen der Geschwindigkeit des Objekts (112) und basierend auf den Änderungen der Ableitung der Geschwindigkeit des Objekts (112) über die Zeit für jedes Segment.

12. Verfahren nach Anspruch 11, wobei die Segmente durch Übergangspunkte begrenzt sind, und ein Übergangspunkt als ein Punkt identifiziert wird, an dem eine Änderung der Geschwindigkeit des Objekts (112) und der Ableitung der Geschwindigkeit des Objekts (112) größer als eine eingestellte Schwelle ist.

## Revendications

1. Système (100), comprenant :
un dispositif de suivi (102) orienté de sorte qu'un premier champ de vision du dispositif de suivi (102) couvre au moins une partie d'un volume cible dans lequel un objet (112) doit être lancé à partir d'un emplacement de lancement (104), l'objet (112) étant une balle de sport ; et
un processeur recevant, en provenance du dispositif de suivi (102), des données de l'objet (112) au cours d'un intervalle de temps au fur et à mesure que l'objet se déplace sur une surface à travers le premier champ de vision et identifiant, à partir des données, une vitesse de l'objet (112) au cours du temps, le processeur déterminant l'état de l'objet (112) à un instant donné pendant l'intervalle de temps parmi un état de rebond, un état de glissement et un état de roulement, sur la base de changements de la vitesse de l'objet (112) et de changements de la dérivée de la vitesse de l'objet (112) au cours du temps.

2. Système (100) selon la revendication 1, dans lequel le processeur calcule une courbe de vitesse de l'objet (112) au cours du temps, sépare la courbe de vitesse en segments et détermine, pour chaque segment, si l'objet (112) est dans l'état de rebond, l'état de glissement ou l'état de roulement, sur la base des changements de la vitesse de l'objet (112) et sur la base des changements de la dérivée de la vitesse de l'objet (112) au cours du temps pour chaque segment.

3. Système (100) selon la revendication 2, dans lequel les segments sont délimités par des points de transition et un point de transition est identifié comme un point auquel un changement de la vitesse de l'objet (112) et de la dérivée de la vitesse de l'objet (112) est supérieur à un seuil défini.

4. Système (100) selon la revendication 3, dans lequel chacun des segments est déterminé comme étant dans l'état de rebond, l'état de glissement ou l'état de roulement en partie sur la base d'une pente déterminée du segment.

5. Système (100) selon l'une des revendications 1 à 4, dans lequel le dispositif de suivi capture des données à partir d'un signal réfléchi par l'objet (112).

6. Système (100) selon l'une des revendications 1 à 5, dans lequel l'objet (112) est une balle de golf non-modifiée.

7. Système (100) selon l'une des revendications 1 à 6, dans lequel le processeur détermine une décélération de l'objet (112) lorsque l'objet (112) est dans l'état de roulement et ajuste la décélération déterminée sur la base d'une pente de la surface sur laquelle l'objet roule.

8. Système (100) selon la revendication 7, dans lequel le processeur soustrait, sur la base de la pente de la surface sur laquelle l'objet roule, toute accélération ou décélération de l'objet (112) provoquée par la gravité pour déterminer la décélération ajustée de l'objet (112) provoquée par la surface sur laquelle l'objet roule.

9. Système (100) selon la revendication 8, dans lequel le processeur délivre en sortie la décélération ajustée de l'objet (112) dans l'état de roulement en tant que lecture de cinémomètre.

10. Procédé, comprenant :
le positionnement d'un dispositif de suivi (102) orienté de sorte qu'un champ de vision du dispositif de suivi (102) couvre au moins une partie d'un volume cible dans lequel un objet (112) doit être lancé à partir d'un emplacement de lancement (104), l'objet (112) étant une balle de sport ;
l'identification d'une vitesse de l'objet (112) au cours du temps, à partir de données de l'objet (112) sur un intervalle de temps au fur et à mesure que l'objet se déplace à travers le premier champ de vision ;
la détermination de l'état de l'objet (112) à un instant donné pendant l'intervalle de temps parmi un état de rebond, un état de glissement et un état de roulement, sur la base de changements de la vitesse de l'objet (112) et de changements de la dérivée de la vitesse de l'objet (112) au cours du temps.

11. Procédé selon la revendication 10, comprenant en outre :
le calcul d'une courbe de vitesse de l'objet (112) au cours du temps ;
la séparation de la courbe de vitesse en segments ; et
la détermination, pour chaque segment, si l'objet (112) est dans l'état de rebond, l'état de glissement ou l'état de roulement, sur la base des changements de la vitesse de l'objet (112) et sur la base des changements de la dérivée de la vitesse de l'objet (112) au cours du temps pour chaque segment.

12. Procédé selon la revendication 11, dans lequel les segments sont délimités par des points de transition et un point de transition est identifié comme un point auquel un changement de la vitesse de l'objet (112) et de la dérivée de la vitesse de l'objet (112) est supérieur à un seuil défini.
